# EUROPÄISCHE PATENTSCHRIFT

(11) **EP 2 898 298 B1**
(45) Veröffentlichungstag und Bekanntmachung des Hinweises auf die Patenterteilung: **30.12.2020**
(21) Anmeldenummer: 13779125.7
(22) Anmeldetag: 10.09.2013
(51) Int. Cl.: G01F 1/58, G01F 1/66, B29B 13/02, B29C 45/00, B29C 65/08, B29C 65/16, B29C 65/20, B29C 65/00, B29D 23/00, E04B 1/86, E04B 2/74, E04B 9/04, E04B 9/34, E04B 1/84, G01F 15/00, G01F 15/14, G01F 15/18

(54) **VORRICHTUNG ZUR DURCHFLUSSMESSUNG IN SCHLAUCH- UND/ODER KUNSTSTOFFROHRSYSTEMEN**
APPARATUS FOR MEASURING FLOW IN HOSE AND/OR PLASTIC PIPE SYSTEMS
DISPOSITIF DE MESURE DE DÉBIT DANS UN SYSTÈME DE FLEXIBLES OU DE TUYAUTERIES DE PLASTIQUE

(30) Priorität: 04.12.2012 DE 102012111757
(43) Veröffentlichungstag der Anmeldung: 29.07.2015
(73) Patentinhaber: Sartorius Stedim Biotech GmbH, 37079 Göttingen (DE)
(72) Erfinder: REGEN, Thomas, 37079 Göttingen (DE); PURMANN, Sebastian, 37073 Göttingen (DE); BÖTTCHER, Lars, 34212 Melsungen (DE)
(74) Vertreter: Vigand, Philippe
(86) Internationale Anmeldenummer: PCT/EP2013/002719
(87) Internationale Veröffentlichungsnummer: WO 2014/086438

(56) Entgegenhaltungen:
- EP-A1- 2 508 851
- WO-A1-2009/071960
- DE-A1-102011 084 171
- US-A- 4 346 604
- US-A1- 2006 052 963

## Beschreibung

Die vorliegende Erfindung betrifft eine Vorrichtung zum Einbau in ein Schlauch- und/oder Kunststoffrohrsystem und Anbringen von Durchflussmesssensoren, die ein Durchflusskunststoffteil als Hohlkörper mit einem mittig angeordneten und verformbaren Bereich mit rechteckigem Querschnitt aufweist, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche zum Anschließen an Schläuche und/oder Kunststoffrohre den mittig angeordneten Bereich flankieren. Weiterhin betrifft die vorliegende Erfindung die Verwendung der zuvor genannten Vorrichtung sowie ein Verfahren zur Durchflussmessung unter Einsatz der Vorrichtung.

Bei einer Vielzahl an Verfahren in der Automation industrieller oder labortechnischer Prozesse werden Durchflussmessungen in Rohr- und Schlauchsystemen durchgeführt. Dazu werden Durchflussmesser überall dort eingebaut, wo die Momentanabgabe im Rohr- oder Schlauchnetz erfasst oder aber der Durchfluss kontrolliert und weiter verarbeitet werden soll. Die Durchflussmessung bildet dabei neben Temperatur, Druck und Kraft eine der wichtigsten Größen in der industriellen Messtechnik und ist eine wesentliche Grundlage der Prozessautomatisierung.

Die Durchflussmessungen bei automatisierten Prozessen variieren je nach Messverfahren und dem zu messenden Medium. Man unterscheidet dabei mechanisch-volumetrische, thermische, akustische, magnetisch-induktive, optische, gyroskopische oder Wirkdruck-/Stauverfahren. Allen Verfahren gemeinsam ist jedoch die Aufnahme bestimmter physikalischer Eigenschaften, z.B. Temperatur, Druck, Schall, Beschleunigung, Drehzahl etc., über einen Messsensor.

Bei geschlossenen Rohr- oder Schlauchleitungssystemen werden die Durchflussmessungen je nach Medium und Ausgabesignal in zwei Untergruppen unterteilt: nämlich Volumendurchfluss und Massendurchfluss. Weiterhin unterscheidet man je nach Messanordnung sogenannte Clamp-On-Durchflussmessgeräte von In-Line-Durchflussmessungen. Bei den In-Line-Durchflussmessungen werden die Messsensoren im Strömungsprofil des zu messenden Mediums angebracht, wohingegen die Clamp-On-Systeme von Außen auf das Rohr oder den Schlauch aufgesetzt und festgeklemmt werden.

Ein solches Clamp-On-System wird in der JP 04940384 B1 beschrieben. Sie offenbart ein Ultraschalldurchflussmessgerät bei dem ein Schlauch, durch den das zu messende Fluid strömt, in eine Scharnier-Messvorrichtung eingelegt und durch Zusammendrücken der Messvorrichtung fixiert wird. Durch die Verformung des Schlauches wird das Strömungsprofil des zu messenden Mediums in ein nahezu rechteckiges Profil überführt. Durch Schwankungen in der Dichte und der Dicke der verwendeten Schläuche sowie den dadurch bedingten Schwankungen des Innenquerschnitts kann es jedoch zu gravierenden Messungenauigkeiten bei der Bestimmung des Volumendurchflusses kommen. Sowohl die Reproduzierbarkeit der Messergebnisse als auch die Kalibrierung des Gesamtsystems werden dadurch ebenfalls stark beeinträchtigt. Darüber hinaus kann sich der Schlauch während der Anwendung innerhalb der Messeinheit verbiegen oder verdrehen oder aber direkt hinter der Messeinheit abknicken, was ebenfalls zu Messungenauigkeiten führt.

Für starre Rohrsysteme ist ein festes Bauteil aus US 6026693 bekannt, das über entsprechende Fittings oder Flansche in ein Rohrsystem eingebaut werden kann. An dem rechtwinklig geformten Bauteil sind direkt hinter den Flanschbereichen von außen Ultraschall-Messsensorpaare angebracht. Durch das Bauteil wird das zu messenden Fluid ohne Übergang von einem runden in ein eckiges Strömungsprofil überführt. Durch den abrupten Übergang von einem runden in ein eckiges Strömungsprofil kommt es zu turbulenten Strömungen, die die Durchflussmessung negativ beeinflussen können. Das starre Bauteil ist für feste Rohrleitungen mit Durchmessern von 2 bis 24 inches geeignet. Durch die bauliche Einheit aus Sensoren und dem eigentlichen Durchflussbauteil mit definiertem Querschnitt ist keine Varianz in Bezug auf die anzuschließenden Messaufnehmer einerseits und die Rohrdurchmesser andererseits möglich.

US 4 346 604 A offenbart eine elektromagnetische Strömungssonde zum Messen einer Fluidströmung, welche austauschbare Magneten und Elektrodenlumenstrukturen aufweist. Ein komplexes Elektrodenleitungsmuster ist in eine Lumeneinheit eingebaut, durch welche der Fluidstrom geleitet wird. Die Magnetstruktur verfügt über eine Magnetfeld-Einstellfähigkeit und justierbare Ausrichtungslaschen zur Aufnahme der Lumeneinheit.

EP 2 508 851 A1 offenbart eine Ultraschall-Durchflussmessvorrichtung, welche leicht auf einer Leitung, durch welche ein Fluid strömt, montiert werden kann. Die Ultraschall-Durchflussmessvorrichtung besteht aus zwei Gehäusehälften und einem Klemmechanismus zum Schließen dieser Gehäusehälften. Die Gehäusehälften weisen darin Rillen und ein Paar von Ultraschallwellenübertragungs -und Empfangselemente auf. Wenn die Leitung zwischen den Rillen eingeklemmt ist, wird die Leitung gegen die Innenwände gedrückt und bildet eine im Wesentlichen quadratische Querschnittskonfiguration.

WO 2009/071960 A1 offenbart ein Verfahren und eine Vorrichtung zur Bestimmung von Strömungsparametern eines Strömungsmediums. Eine Leitung welche in der Vorrichtung verwendet wird, weist eine erste Stelle zur Aufnahme eines Senders in einem Mittelbereich des Messbereichs auf, und zwei zweite Stellen zum Aufnehmen von Empfängern in den Randbereichen des Messbereichs gegenüber der ersten Stelle.

US 2006/052963 A1 offenbart eine Sensor-Sonde, welche ein Paar von einzigartigen Signalwegen durch ein Testmaterial aufweist.

DE 10 2011 084171 A1 offenbart eine Vorrichtung zur berührungslosen Durchflussmessung von Fluiden in flexiblen Schläuchen.

Aufgabe der vorliegenden Erfindung ist es daher, eine Vorrichtung zur Durchflussmessung bereit zu stellen, die sich zum Einsatz in einem Kunststoffschlauch- und/oder Kunststoffrohrsystem eignet und dabei die zuvor genannten Nachteile im Stand der Technik vermeidet. Weiterhin ist es Aufgabe der vorliegenden Erfindung, ein Verfahren zur Durchflussmessung unter Verwendung einer solchen Vorrichtung bereit zu stellen.

Es ist eine Aufgabe der Erfindung eine Vorrichtung zur Verfügung zu stellen, mit der die Messgenauigkeit von Durchflussmessungen verbessert werden kann.

Diese Aufgabe wird durch eine Vorrichtung gemäß Anspruch 1, die Verwendung der Vorrichtung gemäß Anspruch 12, sowie durch ein Verfahren gemäß Anspruch 13 gelöst.

Bevorzugte Ausführungsformen ergeben sich aus den Unteransprüchen.

Demnach beschreibt die vorliegende Erfindung eine Vorrichtung zum Einbau in ein Kunststoffschlauch- und/oder Kunststoffrohrsystem und Anbringen von Durchflussmessaufnehmern, die ein Durchflusskunststoffteil als Hohlkörper mit einem mittig angeordneten und verformbaren Bereich mit rechteckigem Querschnitt aufweist, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche zum Anschließen an Schläuche und/oder Kunststoffrohre den mittig angeordneten Bereich flankieren.

Die Vorrichtung ist so gestaltet, dass von Außen eine Sensormanschette oder ein Sensorgehäuse angebracht werden kann. Eine Signalübertragung zur Ermittlung des Durchflusses findet statt, sobald die Sensorkontaktfläche des Durchflusskunststoffteils an die Sensorflächen im Sensorgehäuse großflächig anliegt. Dazu wird die Vorrichtung in ein Schlauch- oder Kunststoffrohrsystem eingebaut, indem die Schläuche an den Anschlussbereichen befestigt werden. Anschließend wird die Vorrichtung mit einer der Druckbereichsflächen nach unten gerichtet in eine Sensormanschette oder das Sensorgehäuse eingelegt. Durch den zu schließenden Deckel des Sensorgehäuses oder der Sensormanschette oberhalb der zweiten Druckbereichsfläche erfährt das Durchflusskunststoffteil im mittig angeordneten Bereich eine Druckkraft. Diese Druckkraft sorgt für eine leichte Verformung des Kunststoffteils, bei der die Druckfläche in einer Abwärtsbewegung für eine seitliche Verschiebung der Sensorkontaktflächen in Richtung Messaufnehmer in der Sensormanschette sorgt. Durch das Bauteil in Form eines Durchflusskunststoffteils wird die Messgenauigkeit erhöht, da keine weitere Verformung der sich daran anschließenden Rohre oder Schläuche, in denen das Messfluid strömt, notwendig ist. Zusätzlich kann ein elastisches oder teilelastisches Kontaktierungshilfsmittel, z.B. in Form einer Silikonschicht oder eines Silikonmantels, um den mittig angeordneten Bereich (bevorzugt fest mit dem Durchflusskunststoffteil, insbesondere an der/den Sensorkontaktfläche(n) verbunden bzw. angeformt) vorgesehen werden. Dabei kann das Kontaktierungshilfsmittel um den mittig angeordneten Bereich ganz oder abschnittsweise, z.B. nur im Bereich der Sensorkontaktflächen, angeordnet sein. Darüber hinaus kann auf zusätzliche Mittel (z.B. ein Kontaktgel) zur Kontaktherstellung zwischen Sensorkontaktflächen und den eigentlichen Sensoren weitestgehend verzichtet werden.

In diesem Zusammenhang wird mit dem Begriff "verformbar" das Material des mittig angeordneten Bereichs des Durchflusskunststoffteils näher definiert. In diesem Bereich ist das Material in der Weise verformbar, das durch den Druckgeber von Außen- z.B. der Deckel der Sensormanschette- eine Verformung des Bereichs erfolgt, so dass die Sensorkontaktflächen an den Messaufuehmern in der Sensormanschette anliegen. Die Sensorkontaktflächen müssen dabei nicht zu 100% am Messaufnehmer anliegen, aber eine für die Messung notwendige Mindestkontaktfläche zum Messaufnehmer aufweisen. Die Mindestkontaktfläche hängt dabei von der Art und Anordnung der Sensoren ab, für die das Durchflusskunststoffteil konzipiert ist. In der Regel wird jedoch eine Mindestkontaktierung erreicht, bei der auf zusätzliche Hilfsmittel, wie Kontaktgel, verzichtet werden kann. Die Verformung ist von geringem Ausmaß und um ein Vielfaches kleiner als bei den Clamp-On-Schlauchsystemen, bei denen die Schläuche in einen rechteckigen Querschnitt gepresst werden. Je nach gewähltem Kunststoffmaterial kann die Verformung jedoch auch eine elastische oder teilelastische Verformung sein. Die Verformung wird vorzugsweise durch mechanischen Druckaufbau, z.B. durch manuelles Schließen des Sensordeckels, hervorgerufen. Weitere Möglichkeiten einen Druck zur Verformung des Durchflusskunststoffteils sind abhängig von der Art und Form des anzubringenden Messaufnehmers. Neben einer mechanisch ausgeübten Druckkraft ist z.B. auch eine pneumatische Betätigung denkbar.

Unter dem Begriff "rechteckig" im Hinblick auf die Form des Holhkörpers im mittig angeordneten Bereich wird eine im wesentlichen rechteckige Form verstanden, die in den Ecken jedoch leichte Abschrägungen oder Rundungen aufweisen kann. Je nach Verformbarkeit und Auswahl des Kunststoffmaterials kann es daher zu leichten Abweichungen in der rechteckigen Form kommen. Die Grundform des mitig angeordneten Bereichs bleibt jedoch rechteckig oder sogar quadratisch.

Aufgrund von Toleranzen bei der Herstellung von Kunststoffteilen und bei der Herstellung von Sensorgehäusen oder -manschetten, d.h. aufgrund des damit verbundenen Abstands der Sensoren zueinander, kann es im Stand der Technik vorkommen, dass sich die Sensorkontaktflächen des Kunststoffteils und die Messaufnehmer in der Manschette nicht berühren. Bei der vorliegenden Erfindung kann durch die Verformbarkeit des Bauteils ein optimaler Kontakt zwischen Sensorkontaktflächen und den Sensoren und somit auch eine optimale Signalübertragung gewährleistet werden. Darüber hinaus kann auf weitere Hilfsmittel zur Signalübertragung, z.B. Kontaktgel, weitestgehend verzichtet werden, da diese unter anderem eine Verunreinigung des Sensorgehäuses bewirken und die Bedienung in der Folge unangenehmer und aufwendiger macht.

Um von einem runden Strömungsprofil in den angeschlossenen Kunststoffrohren oder Kunststoffschläuchen auf ein eckiges Strömungsprofil im mittig angeordneten Bereich der Vorrichtung zu kommen, geht in einer der Ausführungsformen der Innenquerschnitt in den Anschlussbereichen von einem runden in einen rechteckigen Querschnitt über. Die Strecke in den Anschlussbereichen ist geradlinig zum mittig angeordneten Bereich ausgeführt. Dadurch werden störende Strömungseinflüsse, z.B. Corioliskraft, und daraus resultierende Messungenauigkeiten vermieden.

Die Länge der Übergangsbereiche ist dabei abhängig vom Durchmesser der angeschlossenen Rohre oder Schläuche sowie der Größe und dem genauen Querschnitt des angestrebten Messbereichs im mittleren Teil. Dabei kann der Messbereich je nach Messprinzip und der Anordnung der einzelnen Sensoren variieren. Die Anschlussbereiche werden entsprechend dem verwendeten Messverfahren und der damit verbundenen Anzahl und Anordnung der Sensoren dimensioniert. Der Übergang vom runden in den eckigen Innenquerschnitt erfolgt in der Art, dass turbulente Strömungen oder ein Abreißen der Strömung des zu messenden Fluid vermieden werden.

In einer weiteren Ausführungsform der Vorrichtung sind die Druckbereichsflächen und die Sensorkontaktflächen des mittig angeordneten Bereichs über Dünnstellen, vorzugsweise Filmscharniere bzw. Gelenke, oder über ein Mehrkomponentenkunststoffsystem miteinander verbunden sind.

Durch die Dünnstellen wird eine zusätzliche Flexibilität hinsichtlich der Verformbarkeit im mittig angeordneten Bereich der Vorrichtung erreicht. So kann bei der seitlichen Verschiebung der Sensorkontaktflächen ein unerwünschter Linseneffekt vermieden werden, d.h. der rechteckige Querschnitt bleibt trotz Komprimierung des mittig angeordneten Bereichs erhalten. Außerdem wird durch die Dünnstellen eine noch gezieltere Richtung der Verformung des Vorrichtungsmaterials vorgegeben. Hierzu bieten sich insbesondere Filmscharniere an, die als solche aus dem Bereich Kunststoffverpackungen, z.B. bei Seifenflaschen mit klappbarem Deckel, bekannt sind. Bei der vorliegenden Erfindung wurden die dadurch entstehende Flexibilität zur gerichteten Verformbarkeit des Kunststoffmaterials genutzt, um die passgenaue Verformung der Sensorkontaktflächen zum Sensor zu unterstützen. In Abhängigkeit vom gewählten Kunststoffmaterial werden als Dünnstellen sowohl Filmscharniere oder Gelenke als auch Systeme aus mehreren Kunststoffen verwendet. Bei den Mehrkomponentensystemen wird dazu an den gewünschten Dünnstellen ein gegenüber dem für die übrige Vorrichtung verwendeten Kunststoff vergleichsweise weiches Material verwendet.

In einer weiteren Ausführungsform der Vorrichtung weisen die Sensorkontaktflächen ebene Außenflächen auf.

Durch die ebenen Außenflächen wird eine möglichst große Kontaktfläche zum Messaufnehmer mit den darin enthaltenen Sensoren ermöglicht. Die Auslegung der Flächen erfolgt in Abhängigkeit von der Messmethode und der damit verbundenen Anordnung der Sensoren. Ein Ultraschall-Durchflussmesser misst die Durchflussgeschwindigkeit im Messabschnitt mittels zweier sich gegenüber liegender Sensoren-Anordnungen. Die Sensoren sind in einem Winkel so zueinander angeordnet, dass ein Sensor etwas weiter stromabwärts montiert ist als der andere. Das Durchflusssignal wird durch abwechselndes Messen der Laufzeit eines akustischen Signals von einem Sensor zum anderen ermittelt, wobei der Effekt genutzt wird, dass Schall schneller mit der Durchflussrichtung übertragen wird als gegen die Durchflussrichtung. Der Volumenstrom wird dann durch sequentielles Messen zwischen allen Sensorpaaren in der Anordnung ermittelt.

Um die Messgenauigkeit weiter zu erhöhen, sind in einer der Ausführungsformen die Sensorkontaktflächen parallel zueinander angeordnet. Damit werden insbesondere für Clamp-On-Messsysteme die Sensorkontaktflächen so passgenau wie möglich auf die Sensoren im Messaufnehmer abgestimmt.

Die Druckbereichsflächen grenzen jeweils in etwa rechtwinklig an die Sensorkontaktflächen an und definieren zwei weitere Seiten des mittig angeordneten Bereichs der Vorrichtung. In einer der Ausführungsformen weisen die Druckbereichsflächen Profile als Kontaktflächen für ein sich darum durch Druck zu schließendes Durchflussmessgerät auf.

Die Profile dienen dazu eine gleichmäßige Druckverteilung zu gewährleisten. Darüber hinaus wird durch die Profile die Griffigkeit für den jeweiligen Druckgeber erhöht. Die Form der Profile hängt jedoch auch von der Fertigung des Kunststoffteils ab. So lässt sich eine Rippenstruktur besonders gut im Spritzgussverfahren herstellen. Gleichzeitig bietet die Rippenstruktur den Vorteil, dass der Druck über die lange Mittelrippe und die angrenzenden Querrippen optimal über die gesamte Fläche verteilt werden kann. Andere Ausgestaltungen der Profile sind jedoch ebenfalls ausführbar.

Wie bereits erwähnt, kann der auf die Druckbereichsflächen ausgeübte Druck mechanisch, z.B. durch manuelle Betätigung, oder pneumatisch erfolgen. Je nach Messaufnehmer und Handhabung derselben, sind die Profile an oder auf den Druckbereichsflächen der Vorrichtung platziert und ausgeformt.

In einer weiteren Ausführungsform der Vorrichtung ist das Durchflusskunststoffteil aus bis zu drei Einzelbauteilen, umfassend den mittig angeordneten Bereich und die den mittig angeordneten Bereich flankierenden zwei Anschlussbereiche, zusammengesetzt.

Dadurch wird insbesondere die Flexibilität hinsichtlich des Einsatzes der Vorrichtung erhöht. Die Anschlussbereiche werden entsprechend den anzuschließenden Schläuchen oder Rohren dimensioniert und der mittig angeordnete Bereich kann je nach Messmethode entsprechend ausgetauscht werden, sofern auch hier der Durchmesser auf die Anschlussbereiche und den zu erwartenden Volumenstrom abgestimmt ist. In einer bevorzugten Ausführungsform ist die Querschnittsfläche des angeschlossenen Schlauches oder Kunststoffrohres gleich der Innenquerschnittsfläche des Durchflusskunststoffteils. Weiterhin erlaubt eine mehrteilige Vorrichtung eine flexible Herstellung, da sich die Entformbarkeit besonders gut z.B. für die Fertigung im Spritzgussverfahren eignet. Mit dieser Art der Fertigung ist eine leichte Konizität der Hohlräume verbunden. Darüber hinaus können bei einer mehrteiligen Ausführung des Durchflusskunststoffteils auch assymmetrische Formen umgesetzt werden. Dies ist z.B. von Vorteil, wenn man von einem großen auf einen kleinen Schlauchdurchmesser über die Laufstrecke des Bauteils wechseln will oder um mit der Form die Fließrichtung vorzugeben. Die einzelnen Bauteile können außerdem unterschiedlich farblich gestaltet werden, um z.B. die Handhabung beim Zusammenbau zu erleichtern.

Bei der Ausführungsform aus bis zu drei Einzelbauteilen sind diese thermisch, vorzugsweise durch Schweißverfahren oder Heißprägeverfahren, klebetechnisch, vorzugsweise durch Klebeverfahren oder Umspritzverfahren, oder mechanisch, vorzugsweise durch Verschrauben, miteinander verbunden.

Die zuvor mit der mehrteiligen Bauweise beschriebenen Vorteile bedingen ein passgenaues Zusammenfügen der Einzelteile zu der endgültigen Vorrichtung. Hierzu haben sich verschiedene Verfahren bewährt, die sich je nach gewähltem Kunststoff in thermische, klebetechnische oder mechanische Verbindungsverfahren untergliedern lassen. Bei den thermischen Verfahren werden vor allem die klassischen Kunststoffschweißverfahren, d.h. Heizelementschweißen, Ultraschallschweißen, Laserschweißen, Induktionsschweißen oder Vibrationsschweißen angewendet. Bei den genannten Schweißverfahren handelt es sich um stoffschlüssige Fügeverfahren, bei denen der Kunststoff plastifiziert wird. Für die Schweißverfahren eignen sich dafür ausschließlich Thermoplaste, da nur diese eine Schmelze bilden können. Beim Heizelementschweißen werden die Einzelteile an den Kontaktstellen separat voneinander mittels Heizelementen angeschmolzen und anschließend zusammengeklebt. Dadurch wird eine sehr feste und zugleich hermetisch dichte Verbindung hergestellt, die frei von zusätzlichen Verbindungsmitteln, wie z.B. Klebern, ist. Zusätzliche Klebemittel sind in diesem Zusammenhang oft unerwünscht, da sich diese im späteren Betrieb zersetzen können und Bestandteile ggf. in die Vorrichtung hinein diffundieren können und so möglicherweise das Produkt verunreinigen. Nichtsdestotrotz bieten auch Klebeverfahren je nach Kunststoff Vorteile, z.B. wenn der Kunststoff keiner thermischen Belastung standhält. Bei den Umspritzverfahren wird genau wie bei den Klebverfahren zusätzliches Material eingebracht und die Einzelbauteile entweder mit dem gleichen Kunststoff oder aber mit einem von dem eigentlichen Vorrichtungsmaterial abweichenden Material an den entsprechenden Verbindungsstellen umspritzt bzw. ummantelt. Bei der mechanischen Verbindung sind an den Einzelbauteilen Schraubgewinde, Kupplungsstücke o.ä. vorgesehen. Ein einfaches Zusammenstecken und eine zusätzliche Fixierung mithilfe von Schlauchbindern sind ebenfalls möglich.

In einer weiteren Ausführungsform der Vorrichtung ist das Durchflusskunststoffteil im Spritzgussverfahren, vorzugsweise Mehrkomponenten-Spritzgussverfahren, durch Extrusion, durch mechanische Bearbeitung eines Kunststoffrohling, vorzugsweise durch Drehen und/oder Fräsen, oder durch ein Prototypingverfahren, ausgewählt aus der Gruppe von Vakuumdruckgussverfahren, 3D-Druckverfahren, Lasersintern oder Stereolithographie, hergestellt.

Auch hier hängt die Wahl des Verfahrens im Wesentlichen von der Wahl des verwendeten Kunststoffes ab, da nicht jeder Kunststoff gleichermaßen für jedes Fertigungsverfahren geeignet ist. Die Wahl des Kunststoffes wiederum hängt stark von der Anwendung ab. Hier spielen die individuellen Belastungsparameter durch Druck, Temperatur, mechanische Beanspruchung, Medienbeständigkeit, Sterilisierbarkeit sowie die Eignung für bestimmte Anwendungen z.B. im pharmazeutischen oder medizinischen Bereich, eine entscheidende Rolle.

In einer besonderen Ausführungsform wird das Durchflusskunststoffteil aus einem Thermoplast, ausgewählt aus der Gruppe von Polyethylen (PE), High Density Polyethylen (HDPE), Polypropylen (PP), Polyvinylchlorid (PVC), Polycarbonat (PC), Copolyester , Acrylstyrolbutadiencopoloymer (ABS) oder Styrolacrynitril (SAN); einem Elastomer, ausgewählt aus der Gruppe von Ethylen-Propylen-Dien-Monomer (EPDM) und Flüssigsilikon (LSR); einem thermoplastischen Elastomer (TPE), vorzugsweise auf Urethanbasis oder als Styrol-Blockcopolymer; einem Mehrkomponentenkunststoff, ausgewählt aus einer Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP), hergestellt.

Wie bereits zuvor beschrieben, ist die Auswahl des Kunststoffes sowohl von der gewünschten Anwendung der Vorrichtung als auch von den Kosten für ihr Herstellungsverfahren abhängig. In einer speziellen Ausführungsform ist die Vorrichtung als Einwegartikel gedacht, so dass für solche Anwendungen schon aus Kostengründen die bekannten Thermoplaste Polyethylen oder Polypropylen verwendet werden. Bei den Mehrkomponentenkunststoffen lassen sich verschiedene Materialeigenschaften miteinander kombinieren, z.B. lässt sich eine Steigerung in der Verformbarkeit durch Kombination mit einem thermoplastischen Elastomer erreichen.

In einer weitere Ausführungsform hält die Vorrichtung einem Betriebsdruck ≤ 6 bar, vorzugsweise ≤ 5 bar, und einem Sicherheitsdruck ≤ 7 bar, vorzugsweise ≤ 8 bar, stand.

Der Betriebsdruck hat damit ebenfalls Einfluss auf die Dimensionierung der gesamten Vorrichtung. In Abhängigkeit vom Betriebsdruck, aber auch der Betriebstemperatur, der Dauer der Belastung (Betriebsdauer) und den spezifischen Materialeigenschaften wird somit die spezifische Auslegung der Vorrichtung vorgenommen. Die Auslegung der Vorrichtung ist darüber hinaus von dem zu messenden Fluid und dessen spezifischen Eigenschaften anhängig. Hierbei kann es sich um reine Flüssigkeiten, um Flüssigkeiten mit Gaseinschlüssen, d.h. gelösten Gasen oder Gasblasen, aber auch um Flüssig-Feststoff-Systeme, z.B. Kieselgurfilterpartikel in einem Trägerfluid, handeln.

Wie bereits oben erwähnt ist die Vorrichtung daher so ausgelegt, dass sie einer Temperatur von 5 bis 50°C, vorzugsweise 10 bis 37°C, besonders bevorzugt 15 bis 25°C, standhält.

Diese Temperaturbereiche sind zum einem mit der Verwendung von Kunststoff kompatibel und zum anderen auf die Anwendungen der Vorrichtung, insbesondere im biopharmazeutischen, lebensmitteltechnologischen oder chemischen Bereich, abgestimmt. Bei der Produktion von Biopharmazeutika hängt der Temperaturbereich von den kultivierten Organismen und deren Temperaturprofil sowie den biochemischen Produkten, z.B. Proteinen und deren Temperaturprofil, ab. Dementsprechend ist die Vorrichtung auf diese Temperaturprofile abgestimmt.

In einer weiteren Ausführungsform der Vorrichtung sind die Anschlussbereiche auf Schlauch- und/oder Kunststoffrohrinnendurchmesser von 1/8" bis 2", vorzugsweise 1/4" bis 1", abgestimmt. Für Rohr- und Schlauchdurchmesser ist die Maßeinheit" für den Fachmann nach wie vor gebräuchlich. 1 " (Zoll) entspricht dabei 1 in (inch) was wiederrum 25,4 mm entspricht. Dies sind auch die gängigen Schlauch- und Kunststoffrohrdurchmesser, die als Einwegartikel (single use) in der pharmazeutischen, chemischen oder lebensmitteltechnologischen Industrie sowie in technischen Laboratorien verwendet werden.

In einer weiteren Ausführungsform der Vorrichtung ist diese daher ein Einwegartikel. Aufgrund der hohen Sterilitätsanforderungen sind sogenannte "single use"-Produkte zur Produktion insbesondere im Pharmabereich, in der Medizin, aber auch im Lebensmittelbereich immer häufiger anzutreffen. Mit der hier beschriebenen Vorrichtung wird ein weiterer Baustein für einen automatisierten Produktionsprozess im Einwegsystem bereitgestellt. Um die Kontaminierung zu minimieren oder sogar komplett auszuschließen, ist die vorliegende Vorrichtung nicht nur für den Einbau vor Ort gedacht, sondern findet insbesondere als Baustein in einem geschlossenen Einweg-Fluidsystem Anwendung. Zum Beispiel lässt sich die Vorrichtung zur Durchflussmessung an einen Einweg-Bioreaktor montieren, aus dem nach der Fermentation das Kulturmedium samt dem Zielprodukt in einen anderen Behälter zur weiteren Lagerung oder Aufarbeitung überführt wird. Das über Sterilmembranen an den Zu- und Abläufen verbundene Gesamtfluidsystem wird verpackt, sterilisiert und die Vorrichtung somit als Bestandteil des Gesamtpaketes an die Endnutzer ausgeliefert. Nach der Produktion kann das komplette Paket entsprechend entsorgt werden.

In einer weiteren Ausführungsform der Vorrichtung ist an dem mittig angeordneten Bereich zumindest ein elastisches oder teilelastisches Kontaktierungshilfsmittel zumindest bereichsweise vorgesehen. Somit können etwaige Fertigungstoleranzen von Elementen (z.B. des Messaufnehmers) zuverlässig ausgeglichen werden. Außerdem wird je nach Messprinzip durch das Kontaktierungshilfsmittel die Signalübertragung verbessert. Für das Kontaktierungshilfsmittel sind neben Silikon z.B. folgende thermoplastisch verformbaren Kunststoffe geeignet: Polyolefine, Polyvinylidenfluorid, Fluorkautschuk, Polyvinylchlorid oder Polytetrafluorethen.

Die Anwendungen sind wie bereits dargestellt sehr vielfältig und richten sich in der Regel nach dem angesprochenen Industriezweig. In einem weiteren Aspekt der vorliegenden Erfindung wird die Vorrichtung daher in Schlauch- und/oder Kunststoffrohrsystemen, vorzugsweise Fluidsystemen, besonders bevorzugt Flüssigkeitssysteme, zur Durchflussmessung bei automatisierten industriellen oder labortechnischen Prozessen; vorzugsweise medizinischen, biotechnologischen oder lebensmitteltechnologischen, Prozessen verwendet.

Ein weiterer Aspekt der vorliegenden Erfindung betrifft daher ein Verfahren zur Durchflussmessung, das durch die folgenden Verfahrensschritte gekennzeichnet ist:
a) Bereitstellen einer Vorrichtung aufweisend ein Durchflusskunststoffteil als Hohlkörper mit einem mittig angeordneten und verformbaren Bereich mit rechteckigem Querschnitt, wobei an der Außenfläche des mittig angeordneten Bereichs zwei gegenüberliegende Sensorkontaktflächen und zwei gegenüberliegende Druckbereichsflächen angeordnet sind, und wobei zwei Anschlussbereiche den mittig angeordneten Bereich flankieren,
b) Verbinden der Vorrichtung aus Schritt a) mit einem Schlauch- und/oder Kunststoffrohrsystem sowie damit verbundenen Vorratsgefäßen über die Anschlussbereiche zu einem geschlossenen System,
c) Einbringen des mittig angeordneten Bereichs in ein Durchflussmessgerät aufweisend einen Messaufnehmer mit mindestens einem Sensorpaar und einem Deckel zum Festklemmen des Durchflussmessgerätes, wobei das Durchflusskunststoffteil mit den Sensorkontaktflächen so in dem Durchflussmessgerät angeordnet wird, dass mindestens ein Sensorpaar den Sensorkontaktflächen des Durchflusskunststoffteils zugewandt und der Deckel über einem der Druckbereichsflächen liegt,
d) Anpressen der Sensorkontaktflächen in Richtung Sensorpaar des Durchflussmessgerätes durch Verformung des Durchflusskunststoffteils mittels manuellem Andrücken des Deckels über der Druckbereichsfläche und
e) Anschließen des Durchflussmessgerätes an einen Messumformer mit Auswertungseinheit und Durchführen der Durchflussmessung.

Mit dem vorliegenden Verfahren und der vorliegenden Vorrichtung ist es erstmals möglich, eine präzise Durchflussmessung in Schlauch- und Kunststoffrohrsystemen vorzunehmen, ohne dass die Schläuche oder Rohre direkt für die Messung verformt werden müssen und dadurch einen erhöhten Kalibrierungsaufwand erzeugen. Bei dem vorliegenden Verfahren ist jedoch keine nachträgliche Kalibrierung notwendig, da durch den Einsatz des Durchflusskunststoffformteils ein definierter Messbereich entsteht. Die Messergebnisse werden dadurch reproduzierbar und die Messung als solche präziser, da die zuvor beschriebene Vorrichtung zu einer genauen Geometrie und Materialverteilung im Messbereich führt. Dazu wird in Schritt a) die zuvor beschriebene Vorrichtung bereitgestellt. Diese wird in Schritt b) über die Anschlussbereiche an die Schlauch- oder Kunststoffrohrsysteme angeschlossen. Unter "Anschließen" wird dabei jegliche Art der Verbindung aus der erfindungsgemäßen Vorrichtung und den Schläuchen oder Rohren verstanden. Die Schläuche können z.B. auf die Anschlussbereiche aufgeschoben und mit Schlauchbindern fixiert werden. Bei Kunststoffrohren ließen sich auch Schraubgewinde, Kupplungen oder Anschlussklemmen vorsehen, über die eine Verbindung generiert wird. Im Schritt c) erfolgt die eigentliche Messanordnung aus der Vorrichtung, die von einem Durchflussmessgerät umschlossen wird, indem das Durchflussmessgerät einen Deckel aufweist, der mit, z.B. manuellem Druck, über den Druckbereichsflächen geschlossen wird. Durch das Schließen des Deckels in Schritt d) werden die Sensorkontaktflächen nach außen gedrückt und somit in Richtung der Sensoren, die sich im Messaufnehmer befinden, bewegt. Etwaige unterschiedliche Abmessungen (z.B. jene durch Fertigungstoleranzen bedingte) können insbesondere durch die Verformung des Durchflusskunststoffteils (z.B. des verformbaren Bereichs und/oder eines etwaig darauf bzw. daran zumindest teilweise angebrachten elastischen oder teilelastischen Kontaktierungshilfsmittels) im Wesentlichen ausgeglichen werden. Durch diese einfache Handhabung ist in der Regel kein weiteres Kontaktierungshilfsmittel, z.B. Kontaktgel, notwendig, wodurch sich auch der Reinigungsaufwand erübrigt. Anschließend kann das Durchflussmessgerät an einen Messumformer mit Auswertungseinheit zum Durchführen der Durchflussmessung angeschlossen werden (Schritt e).

In einer Ausführungsform des Verfahrens erfolgt zwischen Schritt b) und c) eine Sterilisation, ausgewählt aus der Gruppe von Strahlensterilisation, vorzugsweise Gammastrahlensterilisation oder Elektronenstrahlensterilisation, Heißdampfsterilisation und Gassterilisation, des in Schritt b) hergestellten, geschlossenen Systems.

Die Art der Sterilisation ist dabei von dem angeschlossenen Gesamtsystem und den auf der Anwendungsseite gewünschten Grad der Sterilisation abhängig. Bei den zuvor beschriebenen Einweg-Komplett-Lösungen wird das Gesamtpaket aus Sterilbehältern, Schläuchen oder Rohren und Durchflussmessvorrichtung verpackt und anschließend nach einem der genannten Verfahren, z.B. mittels Gammasterilisation, sterilisiert.

Die eigentliche Durchflussmessung erfolgt in einer bevorzugten Ausführungsform des Verfahrens als Volumendurchflussmessung, vorzugsweise Ultraschalldurchflussmessung (USD) oder Magnetisch-induktive Durchflussmessung (MID).

Ultraschall-Durchflussmesser (USD) messen die Geschwindigkeit des strömenden Mediums mit Hilfe akustischer Wellen und bestehen aus zwei Teilen: dem eigentlichen Messaufnehmer (Ultraschallsensor) sowie einem Auswerte- und Speiseteil (Transmitter oder Messumformer). Als akustisches Messverfahren bietet es gegenüber anderen Messverfahren einige Vorteile. Die Messung ist weitgehend unabhängig von den Eigenschaften der verwendeten Medien wie elektrische Leitfähigkeit, Dichte, Temperatur und Viskosität. Das Fehlen bewegter mechanischer Teile verringert den Wartungsaufwand und ein Druckverlust durch Querschnittsverengung entsteht nicht. Ein großer Messbereich zählt zu den weiteren positiven Eigenschaften dieses Verfahrens.

Ein weiteres berührungsloses Messprinzip ist die magnetisch-induktive Durchflussmessung (MID). Das Messprinzip dieser Durchflussmesser nutzt die Trennung bewegter Ladungen in einem Magnetfeld. Durch das Rohr oder den Schlauch strömt die zu messende Flüssigkeit, die eine Mindestleitfähigkeit aufweisen muss. Von außen wird mittels Spulen ein senkrecht zur Flussrichtung orientiertes Magnetfeld aufgebracht. Die in der leitfähigen Flüssigkeit vorhandenen Ladungsträger, Ionen oder geladene Teilchen, werden durch das Magnetfeld abgelenkt. An den senkrecht zum Magnetfeld angeordneten Messelektroden entsteht durch die Ladungstrennung eine Spannung, die mit Auswertungseinheit erfasst wird. Die Höhe der gemessenen Spannung ist proportional der Strömungsgeschwindigkeit der Ladungsträger, d.h. zu deren Fließgeschwindigkeit.

### Ausführungsbeispiel: Dimensionierung des Durchflusskunststoffteils

Die Dimensionierung des Durchflusskunststoffteils 1 hängt von vielen unterschiedlichen Faktoren ab, die jedoch alle zueinander in bestimmten Verhältnissen stehen. Das hier beschriebene Ausführungsbeispiel basiert auf einem dafür vorgesehenen Clamp-On-Ultraschalldurchflussmessverfahren, bei dem im Messaufnehmer zwei nicht gezeigte Sensorpaare angeordnet sind. Das Durchflusskunststoffteil 1 wird in den Ultraschallmessaufnehmer 10 eingelegt und über das Schließen des Deckels 11 oberhalb einer Druckbereichsfläche 5, 6 fixiert.

Die Breite des mittig angeordneten, verformbaren Bereichs 2 ist durch die Sensorgrößen vorgegeben, da die Kontaktierung zwischen Sensorkontaktflächen 3, 4 und den Sensoren gewährleistet sein muss. Die Höhe der Sensorkontaktflächen 3, 4 wird durch den Messaufnehmer 10 und die damit verbundene Anzahl und Anordnung der Sensoren definiert. Die Sensorkontaktflächen 3, 4 müssen entsprechend im Bereich des Messfeldes liegen. Der Bereich, in dem die Wandstärke der Sensorkontaktflächen 3, 4 im mittig angeordneten Bereich 2 variieren kann, wird ebenfalls durch den Messaufnehmer 10 vorgegeben. Eine Limitierung der Wandstärke ist durch die erforderliche Druckfestigkeit vorgegeben. Die dafür erforderliche Festigkeit ist von der Belastung, d.h. dem Betriebsdruck, der Temperatur, der Dauer der Belastung sowie den Materialeigenschaften abhängig. Der Kunststoff ist in diesem Fall High Density Polyethylen (HDPE).

In dem hier dargestellten Beispiel sind außerdem Dünnstellen 12, bevorzugt Filmscharniere, vorgesehen, deren Wandstärke auf der Grundlage von Berechnungen nach der Finiten Elemente Methode zur Wandstärke der seitlichen Flächen (Sensorkontaktflächen 3, 4 und Druckbereichsflächen 7, 8) in ein passendes Verhältnis gesetzt werden. Die zu erwartende Verformung lässt sich anhand der FEM-Berechnungen im Vorfeld evaluieren. Gemäß der Berechnungen ist bei einer seitlichen Verschiebung der Sensorkontaktflächen 3, 4 um 0,2 mm eine Verformung der oberen und unteren Druckbereichsflächen 5, 6 von 0,5 mm bei gleichbleibendem quadratischen Innenquerschnitt notwendig. Der quadratische Innenquerschnitt verhindert den Effekt einer akustischen Linse. Eine linsenförmige Verformung der Sensorkontaktflächen 3, 4 wird durch die Filmscharniere verhindert.

Auf der Grundlage der dargestellten Dimensionierung und der in diesem Beispiel verwendeten Ultraschallmessgeräten ergeben sich für die Sensorkontaktflächen 3, 4 im mittig angeordneten Bereich 2 Wandstärken im Bereich von 1/16 mm bis 3/32 mm. Bei größeren Sensoren erhöht sich auch die Wandstärke.

### Figuren

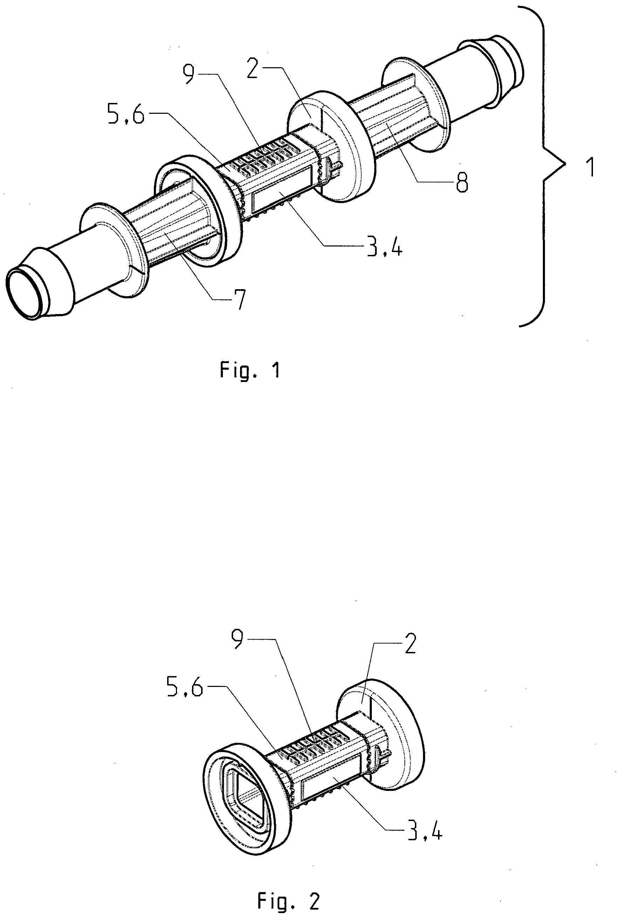

Fig. 1 ist eine perspektivische Gesamtdarstellung des Durchflusskunststoffteils 1 von außen. Der mittig angeordnete, verformbare Bereich 2 wird von den Anschlussbereichen 7 und 8 flankiert, an deren äußeren Enden Schläuche aufgeschoben werden können. Im Bereich der Anschlussbereiche 7, 8 ist der runde Innenquerschnitt der Anschlussbereiche 7, 8 zu erkennen. Am mittig angeordneten Bereich 2 ist eine der Druckbereichsflächen 5, 6 mit einem entsprechenden Profil 9 zu sehen. Die Druckbereichsflächen 5, 6 liegen sich gegenüber. Im rechten Winkel dazu befindet sich eine der beiden ebenen Sensorkontaktflächen 3, 4, die sich ebenfalls gegenüber liegen.
Fig. 2 ist eine perspektivische Darstellung des mittig angeordneten Bereichs 2 mit einer der Druckbereichsflächen 5, 6 und dem Profil 9 sowie den Sensorkontaktflächen 3, 4. Am Kopfende des mittig angeordneten Bereichs 2 ist in dieser Darstellung der nahezu quadratische Innenquerschnitt der Vorrichtung zu erkennen.

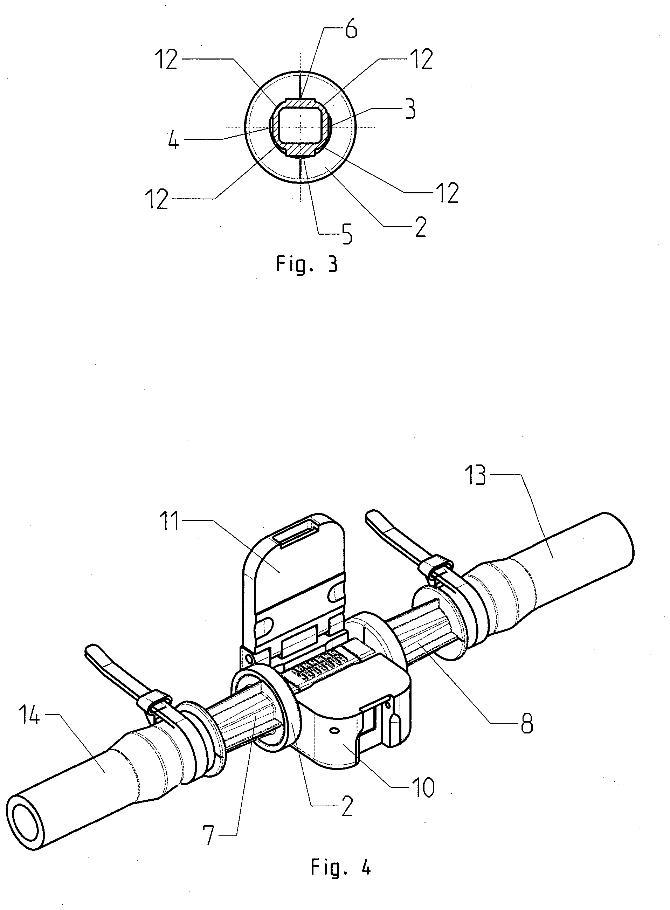

Fig. 3 zeigt einen Querschnitt durch den mittig angeordneten Bereich 2 mit den Dünnstellen 12 zwischen den Druckbereichsflächen 5, 6 und den Sensorkontaktflächen 3, 4. Die durch die rechtwinklige Anordnung der Druckbereichsflächen zu den Sensorkontaktflächen entstehende Messkammer ist dadurch im Wesentlichen rechteckig ausgeformt.
Fig. 4 ist eine perspektivische Darstellung des Durchflusskunststoffteils 1 samt angeschlossenen Schläuchen und Messaufnehmer 10. Die Schläuche 13, 14 sind an den Anschlussbereichen 7, 8 aufgeschoben und jeweils mit einem Schlauchbinder fixiert. Weiterhin ist der mittig angeordnete Bereich 2 des Durchflusskunststoffteils 1 mit den seitlich angeordneten Sensorkontaktflächen 3, 4 in einen Messaufnehmer 10 eingelegt. Entsprechend liegen die Druckbereichsflächen 5, 6 oben (sichtbar) und unten (nicht sichtbar) im Messaufnehmer 10. Der Deckel 11 kann so über einer der Druckbereichsflächen 5, 6 geschlossen werden.

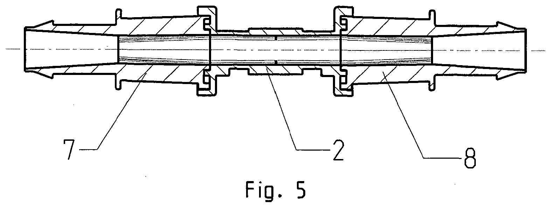

Fig. 5 zeigt einen Längsschnitt durch das gesamte Durchflusskunststoffteil 1 in dreigeteilter Bauweise mit dem mittig angeordneten Bereich 2 und den Anschlussbereichen 7, 8. Durch den Schnitt ist die Einlaufstrecke des fluiden Mediums zu erkennen. Das Strömungsprofil wird so sukzessive von einem runden in ein eckiges Strömungsprofil überführt, wodurch Turbulenzen vermieden werden können. Die leichte Konizität über die gesamte Laufstrecke entsteht bei der dreiteiligen Fertigung im Spritzgussverfahren.

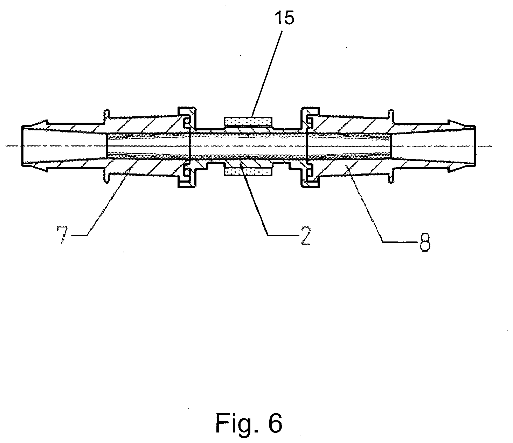

Fig. 6 zeigt einen Längsschnitt des Durchflusskunststoffteils 1 der Erfindung in dreigeteilter Bauweise mit dem mittig angeordneten Bereich 2 und den Anschlussbereichen 7, 8. Hierbei weist der mittig angeordnete Bereich 2 ein elastisches oder teilelastisches Kontaktierungshilfsmittel 15 auf. Vorzugsweise ummantelt das elastische oder teilelastische Kontaktierungshilfsmittel 15 den mittig angeordneten Bereich 2 zumindest im Bereich der Sensorkontaktflächen 3, 4 und den Druckbereichsflächen 5, 6. Das Kontaktierungshilfsmittel kann jedoch auch nur auf den Sensorkontaktflächen 3, 4 und/oder den Druckbereichsflächen 5, 6 angeordnet sein. Das elastisches oder teilelastisches Kontaktierungshilfsmittel 15 besteht zumindest teilweise aus einem Material, welches nachgiebiger bzw. weicher ist als das Material des mittig angeordneten Bereichs 2. Ferner ist das Material des elastischen oder teilelastischen Kontaktierungshilfsmittels 15 dazu geeignet, Schallwellen des Messaufnehmers zu übertragen bzw. diese über die Druckbereichsflächen 5, 6 in das fluide Medium einzukoppeln. Vorzugsweise wird Silikon als Material für das Kontaktierungshilfsmittel 15 verwendet. Das elastische oder teilelastische Kontaktierungshilfsmittel 15 kann mittels Umspritzen, Kleben oder Schweißen mit dem mittig angeordneten Bereich 2 (bevorzugt fest) verbunden bzw. angeformt werden. Aufgabe des elastischen oder teilelastischen Kontaktierungshilfsmittels 15 ist es insbesondere, Herstellungstoleranzen des Messaufnehmers auszugleichen und/oder sicherzustellen, dass die Schallwellen sicher und gleichmäßig über die Druckbereichsflächen 5, 6 in das fluide Medium eingekoppelt werden können, und sicher über die Sensorkontaktflächen 3, 4 erfasst werden können.

### Bezugszeichenliste:

- 1: Durchflusskunststoffteil
- 2: mittig angeordneter Bereich
- 3: Sensorkontaktfläche
- 4: Sensorkontaktfläche
- 5: Druckbereichsfläche
- 6: Druckbereichsfläche
- 7: Anschlussbereich
- 8: Anschlussbereich
- 9: Profil
- 10: Messaufnehmer
- 11: Deckel
- 12: Dünnstellen
- 13: Schlauch
- 14: Schlauch
- 15: Kontaktierungshilfsmittel

## Patentansprüche

1. Vorrichtung zum Einbau in ein Kunststoffschlauch- und/oder Kunststoffrohrsystem und Anbringen von Durchflussmessaufnehmern mit einem Sensorpaar und einem Deckel, aufweisend:
ein Durchflusskunststoffteil (1) als Hohlkörper mit einem mittig angeordneten und verformbaren Bereich (2) mit rechteckigem Querschnitt,
wobei an der Außenfläche des mittig angeordneten Bereichs (2) zwei gegenüberliegende Sensorkontaktflächen (3, 4) und zwei gegenüberliegende Druckbereichsflächen (5, 6) angeordnet sind,
wobei der mittig angeordnete Bereich (2) derart an dem Durchflussmessaufnehmer anordenbar ist, dass die Sensorkontaktflächen (3, 4) dem Sensorpaar des Durchflussmessaufnehmerns zugewandt sind und der Deckel über einem der Druckbereichsflächen (5, 6) liegt,
wobei zwei Anschlussbereiche (7, 8) zum Anschließen an Schläuche und/oder Kunststoffrohre den mittig angeordneten Bereich (2) flankieren, und
wobei an dem mittig angeordneten Bereich (2) ein elastisches Kontaktierungshilfsmittel (15) vorgesehen ist, welches mit den Sensorkontaktflächen (3, 4) verbunden ist, wobei das Material des Kontaktierungshilfsmittels (15) weicher ist als das Material des mittig angeordneten Bereichs (2).

2. Vorrichtung nach Anspruch 1, wobei der Innenquerschnitt in den Anschlussbereichen (7, 8) von einem runden in einen rechteckigen Querschnitt übergeht.

3. Vorrichtung nach Anspruch 1 oder 2, wobei die Druckbereichsflächen (5, 6) und die Sensorkontaktflächen (3, 4) des mittig angeordneten Bereichs (2) über Dünnstellen (12), vorzugsweise Filmscharniere, Gelenke oder über ein Mehrkomponentenkunststoffsystem miteinander verbunden sind.

4. Vorrichtung nach einem der vorhergehenden Ansprüche, wobei die Sensorkontaktflächen (3, 4) ebene Außenflächen aufweisen; und/oder
wobei die Sensorkontaktflächen (3, 4) parallel zueinander angeordnet sind.

5. Vorrichtung nach einem der vorhergehenden Ansprüche, wobei die Druckbereichsflächen (5, 6) Profile (9) als Kontaktflächen für ein sich darum durch Druck zu schließendes Durchflussmessgerät aufweisen.

6. Vorrichtung nach einem der vorhergehenden Ansprüche, wobei sich das Durchflusskunststoffteil (1) aus bis zu drei Einzelbauteilen, umfassend den mittig angeordneten Bereich (2) und die den mittig angeordneten Bereich (2) flankierenden Anschlussbereiche (7, 8), zusammensetzt; und
wobei optional die bis zu drei Einzelbauteile thermisch, vorzugsweise durch Schweißverfahren oder Heißprägeverfahren, klebetechnisch, vorzugsweise durch Klebeverfahren oder Umspritzverfahren, oder mechanisch, vorzugsweise durch Verschrauben, miteinander verbunden sind.

7. Vorrichtung nach einem der vorhergehenden Ansprüche, wobei das Durchflusskunststoffteil (1) im Spritzgussverfahren, vorzugsweise Mehrkomponenten-Spritzgussverfahren, durch Extrusion, durch mechanische Bearbeitung eines Kunststoffrohlings, vorzugsweise durch Drehen und/ oder Fräsen, oder durch Prototypingverfahren, ausgewählt aus der Gruppe von Vakuumdruckgussverfahren, 3D-Druckverfahren, Lasersintern oder Stereolithographie, hergestellt wird.

8. Vorrichtung nach einem der vorhergehenden Ansprüche, wobei das Durchflusskunststoffteil aus einem Thermoplast, ausgewählt aus der Gruppe von Polyethylen (PE), High Density Polyethylen (HDPE), Polypropylen (PP), Polyvinylchlorid (PVC), Polycarbonat (PC), Copolyester, Acrylstyrolbutadiencopoloymer (ABS) oder Styrolacrynitril (SAN); einem Elastomer, ausgewählt aus der Gruppe von Ethylen-Propylen-Dien-Monomer (EPDM) und Flüssigsilikon (LSR); einem thermoplastischen Elastomer (TPE), vorzugsweise auf Urethanbasis oder als Styrol-Blockcopolymer; einem Mehrkomponentenkunststoff, ausgewählt aus einer Mischung aus Polyethylen (PE) und Polypropylen (PP), Polypropylen (PP) und einem thermoplastischen Elastomer, Polycarbonat und einem thermoplastischen Elastomer, und Acrylstyrolbutadiencopoloymer (ABS) und Polypropylen (PP), hergestellt ist.

9. Vorrichtung nach einem der vorhergehenden Ansprüche, wobei die Vorrichtung einem Betriebsdruck ≤ 6 bar, vorzugsweise ≤ 5 bar, und einem Sicherheitsdruck ≤ 7 bar, vorzugsweise ≤ 8 bar, standhält.

10. Vorrichtung nach einem der vorhergehenden Ansprüche, wobei die Vorrichtung einer Temperatur von 5 bis 50°C, vorzugsweise 10 bis 37°C, besonders bevorzugt 15 bis 25°C, standhält.

11. Vorrichtung nach einem der vorhergehenden Ansprüche, wobei die Anschlussbereiche (7, 8) auf Schlauch- und/oder Kunststoffrohrinnendurchmesser von 1/8" (0,32 cm) bis 2" (5,08 cm), vorzugsweise 1/4" (0,64 cm) bis 1" (2,54 cm), abgestimmt sind.

12. Verwendung der Vorrichtung gemäß einem der vorhergehenden Ansprüche in Schlauch- und/oder Kunststoffrohrsystemen, vorzugsweise Fluidsystemen, besonders bevorzugt Flüssigkeitssysteme, zur Durchflussmessung bei automatisierten industriellen oder labortechnischen Prozessen; vorzugsweise medizinischen, biotechnologischen oder lebensmitteltechnologischen, Prozessen.

13. Verfahren zur Durchflussmessung, **gekennzeichnet durch** die folgenden Verfahrensschritte:
a) Bereitstellen einer Vorrichtung aufweisend ein Durchflusskunststoffteil (1) als Hohlkörper mit einem mittig angeordneten und verformbaren Bereich (2) mit rechteckigem Querschnitt,
wobei an der Außenfläche des mittig angeordneten Bereichs (2) zwei gegenüberliegende Sensorkontaktflächen (3, 4) und zwei gegenüberliegende Druckbereichsflächen (5, 6) angeordnet sind,
wobei zwei Anschlussbereiche (7, 8) den mittig angeordneten Bereich (2) flankieren, und
wobei an dem mittig angeordneten Bereich (2) ein elastisches Kontaktierungshilfsmittel (15) vorgesehen ist, welches mit den Sensorkontaktflächen verbunden ist, wobei das Material des Kontaktierungshilfsmittels (15) weicher ist als das Material des mittig angeordneten Bereichs (2),
b) Verbinden der Vorrichtung aus Schritt a) mit einem Schlauch- und/oder Kunststoffrohrsystem sowie damit verbundenen Vorratsgefäßen über die Anschlussbereiche (7, 8) zu einem geschlossenen System,
c) Einbringen des mittig angeordneten Bereichs (2) in das Durchflussmessgerät aufweisend einen Messaufnehmer (10) mit mindestens einem Sensorpaar und einem Deckel (11) zum Festklemmen des Durchflussmessgerätes, wobei das Durchflusskunststoffteil (1) mit den Sensorkontaktflächen (3, 4) so in dem Durchflussmessgerät angeordnet wird, dass mindestens ein Sensorpaar den Sensorkontaktflächen (3, 4) des Durchflusskunststoffteils (1) zugewandt und der Deckel (11) über einem der Druckbereichsflächen (5, 6) liegt,
d) Anpressen der Sensorkontaktflächen (3, 4) in Richtung Sensorpaar des Durchflussmessgerätes durch Verformung des Durchflusskunststoffteils (1) mittels manuellem Andrücken des Deckels (11) über der Druckbereichsfläche (5, 6) und
e) Anschließen des Durchflussmessgerätes an einen Messumformer mit Auswertungseinheit und Durchführen der Durchflussmessung.

14. Verfahren nach Anspruch 13, wobei zwischen Schritt b) und c) eine Sterilisation, ausgewählt aus der Gruppe von Strahlensterilisation, vorzugsweise Gammastrahlensterilisation oder Elektronenstrahlensterilisation, Heißdampfsterilisation und Gassterilisation, des in Schritt b) hergestellte geschlossenen Systems erfolgt.

15. Verfahren nach einem der Ansprüche 13 oder 14, wobei die Durchflussmessung als Volumendurchflussmessung, vorzugsweise Ultraschalldurchflussmessung (USD) oder magnetisch-induktive Durchflussmessung (MID), erfolgt.

## Claims

1. An apparatus for installation into a plastic hose and/or plastic pipe system and attachment of flow measurement sensors with a sensor pair and a lid, having:
a plastic flow part (1) as a hollow body with a centrally arranged and deformable region (2) with rectangular cross-section,
wherein on the outer surface of the centrally arranged region (2) two opposing sensor contact surfaces (3, 4) and two opposing pressure region surfaces (5, 6) are arranged,
wherein the centrally arranged region (2) can be arranged on the flow measurement sensor such that the sensor contact surfaces (3, 4) are facing the sensor pair of the flow measurement sensor and the lid lies above one of the pressure region surfaces (5, 6),
wherein two connection regions (7, 8) for connection to the hoses and/or plastic pipes flank the centrally arranged region (2), and
wherein an elastic contacting means (15) is provided on the centrally arranged region (2) which is connected to the sensor contact surfaces (3, 4), wherein the material of the contacting means (15) is softer than the material of the centrally arranged region (2).

2. The apparatus according to claim 1, wherein the inner cross-section in the connection regions (7, 8) changes from a round to a rectangular cross-section.

3. The apparatus according to claim 1 or 2, wherein the pressure region surfaces (5, 6) and the sensor contact surfaces (3, 4) of the centrally arranged region (2) are connected to one another via thin sections (12), preferably film hinges, articulations or via a multiple component plastic system.

4. The apparatus according to any of the preceding claims, wherein the sensor contact surfaces (3, 4) have plane outer surfaces; and/or
wherein the sensor contact surfaces (3, 4) are arranged parallel to one another.

5. The apparatus according to any of the preceding claims, wherein the pressure region surfaces (5, 6) have profiles (9) as contact surfaces for a flow meter to be closed around by means of pressure.

6. The apparatus according to any of the preceding claims, wherein the plastic flow part (1) is composed of up to three single components, comprising the centrally arranged region (2) and the connection regions (7, 8) flanking the centrally arranged region (2); and
wherein optionally the up to three single components are connected to one another thermally, preferably by a welding or hot embossing method, by adhesion, preferably by adhesive bonding or overmolding methods, or mechanically, preferably by screwing.

7. The apparatus according to any of the preceding claims, wherein the plastic flow part (1) is manufactured in the injection molding method, preferably the multiple component injection molding method, by extrusion, by mechanical processing of a plastic blank, preferably by turning and/or milling, or by a prototyping method, selected from the group of vacuum die casting method, 3D-printing method, laser sintering or stereolithography.

8. The apparatus according to any of the preceding claims, wherein the plastic flow part (1) is manufactured from a thermoplast selected from the group of polyethylene (PE), high density polyethylene (HDPE), polypropylene (PP), polyvinyl chloride (PVC), polycarbonate (PC), copolyester, acrylonitrile butadiene styrene (ABS) or styrene acrylonitrile (SAN); an elastomer, selected from the group of ethylene propylene diene monomer (EPDM) and liquid silicone (LSR); a thermoplastic elastomer (TPE), preferably based on urethane or as a styrene block copolymer; a multiple component plastic selected from a mixture of polyethylene (PE) and polypropylene (PP), polypropylene (PP) and a thermoplastic elastomer, polycarbonate and a thermoplastic elastomer, and acrylonitrile butadiene styrene (ABS) and polypropylene (PP).

9. The apparatus according to any of the preceding claims, wherein the apparatus withstands an operating pressure ≤ 6 bar, preferably ≤ 5 bar, and a safety pressure ≤ 7 bar, preferably ≤ 8 bar.

10. The apparatus according to any of the preceding claims, wherein the apparatus withstands a temperature of 5 to 50°C, preferably 10 to 37°C, especially preferably 15 to 25°C.

11. The apparatus according to any of the preceding claims, wherein the connection regions (7, 8) are adapted to hose and/or plastic pipe internal diameters from 1/8" (0.32 cm) to 2" (5.08 cm), preferably 1/4" (0.64 cm) to 1" (2.54 cm) .

12. Use of the apparatus according to any of the preceding claims in hose and/or plastic pipe systems, preferably fluid systems, especially preferably liquid systems, for flow measurement in automated industrial or laboratory processes; preferably medical, biotechnological or food technological processes.

13. The method for flow measurement, **characterized by** the following steps:
a) providing an apparatus having a plastic flow part (1) as a hollow body with a centrally arranged and deformable region (2) with rectangular cross-section,
wherein on the outer surface of the centrally arranged region (2) two opposing sensor contact surfaces (3, 4) and two opposing pressure region surfaces (5, 6) are arranged,
wherein two connection regions (7, 8) flank the centrally arranged region (2), and
wherein an elastic contacting means (15) is provided on the centrally arranged region (2) which is connected to the sensor contact surfaces, wherein the material of the contacting means (15) is softer than the material of the centrally arranged region (2),
b) connecting the apparatus from step a) to a hose and/or plastic pipe system as well as storage vessels associated therewith above the connection regions (7, 8) to a closed system,
c) introducing the centrally arranged region (2) into the flow meter having a measurement sensor (10) with at least one sensor pair and a lid (11) for clamping the flow meter, wherein the plastic flow part (1) with the sensor contact surfaces (3, 4) is arranged in the flow meter such that at least one sensor pair faces the sensor contact surfaces (3, 4) of the plastic flow part (1) and the lid (11) lies above one of the pressure region surfaces (5, 6),
d) pressing the sensor contact surfaces (3, 4) in the direction of the sensor pair of the flow meter by deforming the plastic flow part (1) by means of manually pressing the lid (11) over the pressure region surfaces (5, 6) and
e) connecting the flow meter to a measurement transducer with an evaluation unit and performing the flow measurement.

14. The method according to claim 13, wherein between step b) and c) a sterilization, selected from the group of radiosterilization, preferably gamma ray sterilization or electron beam sterilization, hot steam sterilization and gas sterilization, of the closed system produced in step b) occurs.

15. The method according to any of claims 13 or 14, wherein the flow measurement occurs as a volume flow measurement, preferably ultrasonic flow measurement (USD) or magnetic-inductive flow measurement (MID).

## Revendications

1. Dispositif destiné à être intégré dans un système de flexibles et/ou de tuyauteries en plastique et à abriter des débitmètres pourvus d'une paire de capteurs et d'un couvercle, présentant :
une partie en plastique d'écoulement (1) sous la forme d'un corps creux, pourvue d'une région (2) disposée au milieu et déformable ayant une section transversale rectangulaire,
dans lequel deux surfaces de contact de capteur (3, 4) opposées et deux surfaces de région de pression (5, 6) opposées sont disposées sur la surface externe de la région (2) disposée au milieu,
dans lequel la région (2) disposée au milieu peut être disposée sur le débitmètre de sorte que les surfaces de contact de capteur (3, 4) soient tournées vers la paire de capteur du débitmètre et que le couvercle réside au-dessus d'une des surfaces de région de pression (5, 6),
dans lequel deux régions de raccordement (7, 8) destinées au raccordement à des flexibles et/ou des tuyauteries en plastique flanquent la région (2) disposée au milieu, et
dans lequel, sur la région (2) disposée au milieu, on prévoit un moyen auxiliaire de mise en contact (15) élastique qui est relié aux surfaces de contact de capteur (3, 4), dans lequel la matière du moyen auxiliaire de mise en contact (15) est plus souple que la matière de la région (2) disposée au milieu.

2. Dispositif selon la revendication 1, dans lequel la section transversale intérieure dans les régions de raccordement (7, 8) passent d'une section transversale ronde à rectangulaire.

3. Dispositif selon la revendication 1 ou 2, dans lequel les surfaces de région de pression (5, 6) et les surfaces de contact de capteur (3, 4) de la région (2) disposée au milieu sont reliées entre elles par le biais d'endroits minces (12), de préférence des charnières de film, des articulations ou par le biais d'un système en plastique multicomposants.

4. Dispositif selon l'une des revendications précédentes, dans lequel les surfaces de contact de capteurs (3, 4) présentent des surfaces extérieures planes ; et/ou
dans lequel les surfaces de contact de capteurs (3, 4) sont disposées en parallèle.

5. Dispositif selon l'une des revendications précédentes, dans lequel les surfaces de région de pression (5, 6) présentent des profilés (9) en tant que surfaces de contact pour un appareil de mesure du débit à enceindre autour par pression.

6. Dispositif selon l'une des revendications précédentes, dans lequel la partie en plastique d'écoulement (1) se compose de jusqu'à trois composants individuels, comprenant la région (2) disposée au milieu et les régions de raccordement (7, 8) flanquant la région (2) disposée au milieu ; et
dans lequel, éventuellement, les jusqu'à trois composants individuels sont reliés entre eux thermiquement, de préférence par des procédés de soudage ou des procédés de gaufrage à chaud, par technique de collage, de préférence par des procédés de collage ou par des procédés de surmoulage, ou mécaniquement, de préférence par vissage.

7. Dispositif selon l'une des revendications précédentes, dans lequel la partie en plastique d'écoulement (1) est fabriquée dans le procédé de moulage par injection, de préférence le procédé de moulage par injection multicomposants, par extrusion, par usinage mécanique d'une ébauche de tube en plastique, de préférence par rotation et/ou fraisage, ou par des procédés de prototypage, choisis dans le groupe des procédés de moulage pressurisé sous vide, procédés d'impression 3D, frittage laser ou stéréolithographie.

8. Dispositif selon l'une des revendications précédentes, dans lequel la partie en plastique d'écoulement est fabriquée en un thermoplastique, choisi dans le groupe du polyéthylène (PE), polyéthylène haute densité (HDPE), polypropylène (PP), polychlorure de vinyle (PVC), polycarbonate (PC), copolyester, copolymère d'acrylostyrène-butadiène (ABS) ou styrène-acrylonitrile (SAN) ; un élastomère, choisi dans le groupe du monomère d'éthylène - propylène - diène (EPDM) et de la silicone liquide (LSR) ; un élastomère thermoplastique (TPE), de préférence à base d'uréthane ou de copolymère à bloc styrène ; un plastique multicomposant, choisi parmi un mélange de polyéthylène (PE) et de polypropylène (PP), de polypropylène (PP) et d'un élastomère thermoplastique, de polycarbonate et d'un élastomère thermoplastique et de copolymère d'acrylostyrène-butadiène (ABS) et de polypropylène (PP).

9. Dispositif selon l'une des revendications précédentes, dans lequel le dispositif supporte une pression de fonctionnement ≤ 6 bar, de préférence ≤ 5 bar, et une pression de sécurité ≤ 7 bar, de préférence ≤ 8 bar.

10. Dispositif selon l'une des revendications précédentes, dans lequel le dispositif supporte une température de 5 à 50 °C, de préférence 10 à 37 °C, de manière particulièrement préférée de 15 à 25 °C.

11. Dispositif selon l'une des revendications précédentes, dans lequel les régions de raccordement (7, 8) sont adaptées aux diamètres intérieurs des flexibles ou de la tuyauterie en plastique de 1/8'' (0,32 cm) à 2" (5,08 cm), de préférence de 1/4'' (0,64 cm) à 1" (2,54 cm).

12. Utilisation du dispositif selon l'une des revendications précédentes dans des systèmes de flexibles et de tuyauteries en plastique, de préférence des systèmes de fluide, particulièrement préférentiellement des systèmes de liquide, pour la mesure du débit lors de processus industriels ou techniques de laboratoire automatisés ; de préférence lors de processus médicaux, biotechnologiques ou agroalimentaires.

13. Procédé de mesure du débit, **caractérisé par** les étapes de procédé suivantes :
a) mise à disposition d'un dispositif présentant une partie en plastique d'écoulement (1) sous la forme d'un corps creux, pourvue d'une région (2) disposée au milieu et déformable ayant une section transversale rectangulaire,
dans lequel deux surfaces de contact de capteur (3, 4) opposées et deux surfaces de région de pression (5, 6) opposées sont disposées sur la surface externe de la région (2) disposée au milieu,
dans lequel deux régions de raccordement (7, 8) flanquent la région (2) disposée au milieu, et
dans lequel, sur la région (2) disposée au milieu, on prévoit un moyen auxiliaire de mise en contact (15) élastique qui est relié aux surfaces de contact de capteur, dans lequel la matière du moyen auxiliaire de mise en contact (15) est plus souple que la matière de la région (2) disposée au milieu.
b) liaison du dispositif venant de l'étape a) à un système de flexibles et/ou de tuyauteries en plastique et de récipients de réserve qui y sont reliés par le biais des régions de raccordement (7, 8) pour former un système fermé,
c) incorporation de la région (2) disposée au milieu dans l'appareil de mesure de débit présentant un enregistreur de mesure (10) ayant au moins une paire de capteurs et un couvercle (11) pour la fixation par serrage de l'appareil de mesure de débit, où la partie en plastique d'écoulement (1) ayant les surfaces de contact de capteur (3, 4) est disposée dans l'appareil de mesure de débit de sorte qu'au moins une paire de capteur soit tournée vers les surfaces de contact de capteur (3, 4) de la partie en plastique d'écoulement (1) et le couvercle (11) réside au-dessus d'une des surfaces de région de pression (5, 6),
d) appui des surfaces de contact de capteur (3, 4) dans la direction de la paire de capteurs de l'appareil de mesure de débit par déformation de la partie en plastique d'écoulement (1) au moyen d'une pression manuelle sur le couvercle (11) au-dessus de la surface de la région de pression (5, 6) et
e) raccordement de l'appareil de mesure de débit à un convertisseur de mesure avec une unité d'évaluation et réalisation de la mesure de débit.

14. Procédé selon la revendication 13, dans lequel, entre l'étape b) et c), une stérilisation, choisie dans le groupe de la stérilisation par rayonnement, de préférence la stérilisation aux rayons gamma ou la stérilisation par faisceaux électroniques, la stérilisation à la vapeur brûlante, et la stérilisation au gaz, du système fermé fabriqué à l'étape b) est effectuée.

15. Procédé selon l'une des revendications 13 ou 14, dans lequel la mesure du débit se fait sous forme de mesure de débit volumique, de préférence mesure de débit ultrasonore (USD) ou mesure de débit par induction magnétique (MID).
